# EUROPÄISCHE PATENTSCHRIFT

(11) **EP 0 683 089 B1**
(45) Veröffentlichungstag und Bekanntmachung des Hinweises auf die Patenterteilung: **04.02.1998**
(21) Anmeldenummer: 95107391.5
(22) Anmeldetag: 16.05.1995
(51) Int. Cl.: B62D 53/06, B60G 17/005, B60P 1/02

(54) **Strassenfahrzeug mit absenkbarer Ladefläche**
Road vehicle with lowerable loading platform
Véhicule routier à plateforme de chargement abaissable

(30) Priorität: 17.05.1994 DE 9408076 U
(43) Veröffentlichungstag der Anmeldung: 22.11.1995
(73) Patentinhaber: Monthero, Carlyle, D-76870 Kandel (DE)
(72) Erfinder: Monthero, Carlyle, D-76870 Kandel (DE)
(74) Vertreter: Patentanwälte Möll und Bitterich

(56) Entgegenhaltungen:
- DE-A- 2 938 518
- DE-A- 3 637 387
- DE-C- 873 939
- DE-U- 9 404 769
- GB-A- 1 124 792
- US-A- 3 199 890

## Beschreibung

Die Erfindung betrifft Straßenfahrzeuge, insbesondere Anhänger, mit einer Ladefläche, deren Hinterkante bis auf den Erdboden absenkbar ist, gemäß dem Oberbegriff des Anspruchs 1. Derartige Fahrzeuge sind in vielen Varianten bekannt und handelsüblich.

Der vorliegenden Erfindung liegt die Aufgabe zugrunde, ein Straßenfahrzeug der eingangs genannten Art anzugeben, welches bei einfachster Konstruktion und Bedienung nicht nur eine große Bodenfreiheit und einen großen Hub besitzt, sondern gleichzeitig auch noch verbesserte Fahreigenschaften aufweist.

Diese Aufgabe wird gelöst durch ein Straßenfahrzeug mit den Merkmalen des Anspruchs 1.

Vorteilhaft an der vorliegenden Erfindung ist die Einzelradaufhängung, da dadurch die großen und schweren durchgehenden Achsen Zugunsten von kurzen Achsstummeln, die gemäß einer vorteilhaften Weiterbildung mit Hilfe von Buchsen im Rahmenchassis gelagert sind, entfallen. Der wesentliche Vorteil für die Praxis resultiert jedoch aus den Haltegabeln, die bei angehobener Ladefläche in Haltenuten an den Kolbenstangen der Hydraulikzylinder einfahren und das Fahrgestell in der Fahrposition mechanisch blockieren. Dadurch entfällt die Notwendigkeit, die Hydraulikzylinder ständig unter Druck zu halten oder kniehebelartige Konstruktionen zu verwenden.

Gemäß einer vorteilhaften Weiterbildung der Erfindung sind die Radlenker gekröpft. Dies ermöglicht eine verbesserte Spurführung.

Da die Kolbenstange der Hubzylinder in der Fahrposition des Fahrzeugs durch die Haltegabeln mechanisch blockiert wird, muß die Feder-Dämpfer-Konstruktion zwischen Zylinder und Achshebel, genauer gesagt zwischen Haltenut und Achshebel, positioniert werden.

Aus Platzgründen empfiehlt sich eine Feder-Dämpfer-Konstruktion in Form einer sogenannten Ringfeder. Ringfedern sind spezielle Konstruktionselemente, hergestellt aus einem Paket von profilierten Stahlringen, die gute Federeigenschaften mit hohen Reibwerten verbinden. Ein solches Fahrzeug besitzt herausragende Straßenfahreigenschaften.

Eine ähnliche Feder-Dämpfungs-Wirkung läßt sich mit Hilfe von Gummi-Hohlfedern erreichen, die zwischen Zylindergehäuse und einem an der Kolbenstange montierten Halteteller positioniert werden. Gummi-Hohlfedern haben eine Dämpfung von 20 %.

Um das Eindringen von Schmutz in den Zylinder zu verhindern, dessen kolbenstangenseitiges Ende im Falle einer schwenkbaren Kolbenstange offen sein muß, empfiehlt sich die Verwendung einer Dichtmanschette zwischen Zylinder und Kolbenstange.

Vorzugsweise handelt es sich um eine innenliegende Manschette, die besser gegen Beschädigung geschützt ist.

Vorteilhafterweise dient zur Betätigung der jedem Zylinder zugeordneten Haltegabeln ein zentral zu betätigendes Hebelgestänge.

Gemäß einer bevorzugten Weiterbildung der Erfindung sind am Rahmenchassis Einrichtungen für Wechselaufbauten vorgesehen. Es besteht so die Möglichkeit, den Anhänger je nach Bedarf mit einer Ladepritsche, mit einer Pferdetransportbox und dergleichen mehr auszurüsten.

Anhand der Zeichnung soll die Erfindung in Form eines Ausführungsbeispiels näher erläutert werden. Es zeigen
- Fig. 1: eine Draufsicht auf einen Anhänger ohne Aufbau,
- Fig. 2: ausschnittsweise eine vergrößerte Darstellung der für das Heben und Senken verantwortlichen Bauteile als Seitenansicht und
- Fig. 3: ausschnittsweise einen Schnitt durch das Rahmenchassis gemäß Linie III-III in Fig. 1.

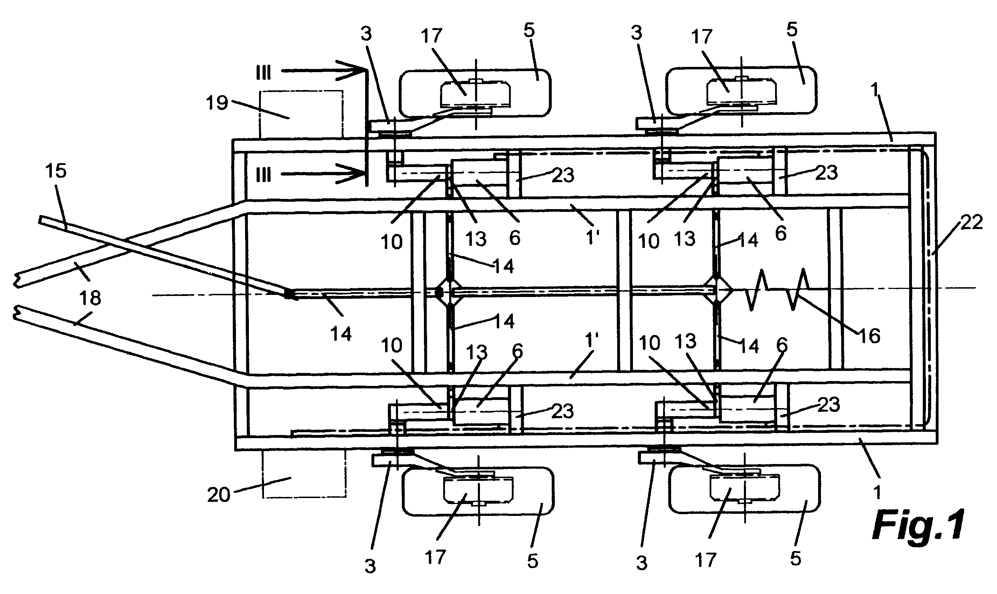

Fig. 1 zeigt eine Draufsicht auf ein Rahmenchassis 1, 1' eines Anhängers, dessen Hinterkante 22 bis auf die Fahrbahn absenkbar ist. Das Rahmenchassis 1, 1' ist wie an sich bekannt aus Stahlrohren zusammengeschweißt. Am vorderen Ende erkennt man eine Deichsel 18.

Der Anhänger fährt auf vier einzeln aufgehängten Rädern 5, von denen jedes am Ende eines um einen Achsstummel 2 schwenkbaren Radlenkers 3 befestigt ist. Trommel- oder Scheibenbremsen 17 ermöglichen das effektive Abbremsen des Anhängers.

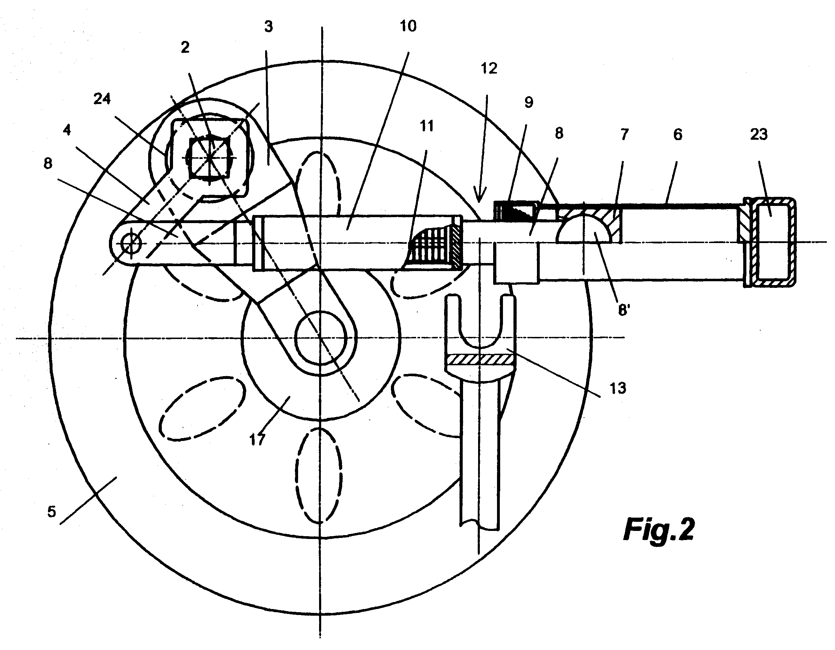

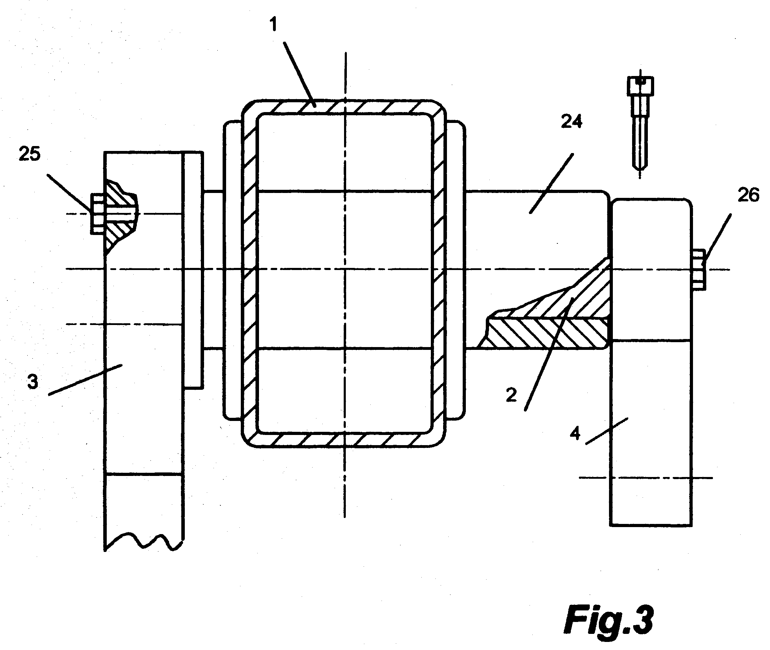

Die Fig. 2 und 3 zeigen als ausschnittsweise Seitenansicht bzw. als Schnitt die zum Heben und Senken verantwortlichen Fahrzeugteile. Man erkennt den Achsstummel 2, der in einer Buchse 24, die mit dem Rahmenchassis 1 verschweißt ist, drehbar gelagert ist. Am äußeren Ende des Achsstummels 2 ist der Radlenker 3, am inneren Ende ein Achshebel 4 angeschraubt, und zwar mit Hilfe von Schrauben 25 bzw. 26.

Eine stabilere, zweiseitige Lagerung der Achsstummel 2 bzw. der Buchsen 24 erreicht man durch eine Verlängerung derselben bis zum parallellaufenden Rahmenrohr 1'.

An einem querliegenden Rahmenrohr 23 ist ein Hydraulikzylinder 6 befestigt. An dessen Kolben 7 ist eine Kolbenstange 8 mit Hilfe eines Schwenkgelenks 8' beweglich gelagert. Eine Dichtmanschette 9, deren weites Ende am offenen Zylinderende innen und deren enges Ende an der Kolbenstange 8 befestigt ist, verhindert das Eindringen von Schmutz in den Zylinder 6.

Das freie Ende der Kolbenstange 8 ist am Achshebel 4 angelenkt. In die Kolbenstange 8 eingesetzt ist eine Feder-Dämpfungs-Kombination 10 in Form einer sogenannten Ringfeder 11, bestehend aus einem Satz von speziell profilierten Stahlringen, die gute Federeigenschaften und hohe Reibungsdämpfung miteinander verbinden.

Fig. 2 zeigt den Kolben 7 des Hydraulikzylinders 6 in seiner ausgefahrenen Position. Das Rad 5 ist abgesenkt, die Ladefläche befindet sich in der Fahrposition. Man erkennt zwischen dem Ende des Zylinders 6 und dem benachbarten Ende der Feder-Dämpfungs-Kombination 10 eine Haltenut 12 im Bereich der Kolbenstange 8. Zur Verriegelung der Kolbenstange 8 in dieser Position dient eine Haltegabel 13, die zwecks besserer Darstellung um 90 Grad gedreht gezeichnet ist. Sobald die Haltegabel 13 in die Haltenut 12 eingefahren wird, ist die Kolbenstange 8 mechanisch blockiert und das Fahrzeug bleibt in der angehobenen Fahrposition. Wird die Gabel 13 wieder herausgezogen, schwenkt unter dem Gewicht des Anhägers der Radlenker 3 gegen den Uhrzeiger nach oben. Dabei wird der Kolben 7 in den Zylinder 6 eingefahren, wobei das Schwenkgelenk 8' für die Bewegungsanpassung sorgt.

Die Abmessungen von Rad 5, Radlenker 3, Achshebel 4 und Zylinder 6 sind so aufeinander abgestimmt, daß die Hinterkante 22 (Fig. 1) des Rahmenchassis 1 bzw. der Ladefläche bis auf die Fahrbahn abgesenkt werden können. Eine am Rahmenchassis 1 mitgeführte Batterie 19 speist eine elektrische Hydraulikpumpe 20, die über Hydraulikleitungen 21 mit den Hydraulikzylindern 6 in Verbindung steht.

Zur synchronen Betätigung aller Haltegabeln 13 zeigt Fig. 1 ein Hebelgestänge 14, welches von einem an der Deichsel 18 angeordneten zentralen Bedienhebel 15 betätigt wird. Eine Feder 16 sorgt dafür, daß Betätigungsgestänge 14 und Haltegabeln 13 selbsttätig wieder in ihre Grundstellung zurückgehen.

Zur Befestigung von Wechselaufbauten, beispielsweise in Form von Ladepritschen, Pferdetransportboxen usw., können an dem Rahmenchassis 1 entsprechende Befestigungsvorrichtungen vorgesehen werden, wie sie aus dem Stand der Technik bekannt sind.

## Patentansprüche

1. Straßenfahrzeug, insbesondere Anhänger, mit einer Ladefläche, deren Hinterkante bis auf die Fahrbahn absenkbar ist, umfassend
- ein Rahmenchassis (1, 1'),
- wenigstens zwei am Chassis (1, 1') gelagerte Achsen (2),
- je einen Radlenker (3) und einen Achshebel (4) an der Achse (2),
- je ein Rad (5) am Ende des Radlenkers (3),
- je einen Hydraulikzylinder (6) mit Kolben (7) und Kolbenstange (8) zwischen Chassis (1, 1') und Achshebel (4)
- und wenigstens einen Stoßdämpfer, ferner umfassend die Merkmale:
- die Räder (5) sind einzeln aufgehängt,
- die Achsen (2) sind als Achsstummel ausgebildet, gekennzeichnet durch die Merkmale:
- zwischen Zylinder (6) und Achshebel (4) ist eine Feder-Dämpfer-Konstruktion (10) montiert,
- an der Kolbenstange (8) ist eine Haltenut (12) vorgesehen,
- und am Chassis (1) ist wenigstens eine Haltegabel (13) gelagert,
-- die mit der Haltenut (12) korrespondiert
-- und die Kolbenstange (8) bei abgesenkten Rädern (5) mechanisch blockiert.

2. Straßenfahrzeug nach Anspruch 1, gekennzeichnet durch das Merkmal:
- die Radlenker (3) sind gekröpft.

3. Straßenfahrzeug nach Anspruch 1 oder 2, gekennzeichnet durch das Merkmal:
- die Achsstummel (2) sind an zwei parallellaufenden Rahmenteilen (1, 1') zweiseitig gelagert.

4. Straßenfahrzeug nach Anspruch 1, 2 oder 3, gekennzeichnet durch das Merkmal:
- die Achsstummel (2) sind in Buchsen (24) drehbar am Chassis (1, 1') befestigt.

5. Straßenfahrzeug nach einem der Ansprüche 1 bis 4, gekennzeichnet durch das Merkmal:
- die Feder-Dämpfer-Kombination (10) ist als Ringfeder (11) realisiert.

6. Straßenfahrzeug nach einem der Ansprüche 1 bis 4, gekennzeichnet durch das Merkmal:
- die Feder-Dämpfer-Konstruktion (10) ist als Gummi-Hohlfeder realisiert.

7. Straßenfahrzeug nach einem der Ansprüche 1 bis 6, gekennzeichnet durch das Merkmal:
- die Kolbenstange (8) ist am Kolben (7) schwenkbar gelagert,
- eine Dichtmanschette (9) zwischen Zylinder (6) und Kolbenstange (8) verhindert das Eindringen von Schmutz.

8. Straßenfahrzeug nach Anspruch 7, gekennzeichnet durch das Merkmal:
- die Dichtmanschette (9) ist im Zylinder (6) geschützt untergebracht.

9. Straßenfahrzeug nach einem der Ansprüche 1 bis 8, gekennzeichnet durch die Merkmale:
- jedem Zylinder (6) ist eine Haltegabel (13) zugeordnet,
- alle Haltegabeln (13) sind über ein Hebelgestänge (14, 15) zentral zu betätigen.

10. Straßenfahrzeug nach Anspruch 1, gekennzeichnet durch das Merkmal:
- am Rahmenchassis (1, 1') sind Befestigungsmittel für Wechselaufbauten vorgesehen.

## Claims

1. A road vehicle, in particular a trailer, having a loading area, the rear edge of which can be lowered down to the ground, comprising
- a chassis frame (1,1')
- at least two axles (2) mounted on the chassis (1,1'),
- a wheel link (3) and an axle member (4) on each axle (2),
- a wheel (5) at the end of each wheel link (3),
- a hydraulic cylinder (6) with a piston (7) and a piston rod (8) between the chassis (1,1') and each axle member (4),
- and at least one shock absorber, further comprising the features that:
- the wheels (5) are independently suspended,
- the axles (3) are formed as stub axles,
characterised by the features that:
- a spring-damper assembly (10) is mounted between the cylinder (6) and the axle member (4),
- the piston rod (8) is provided with a retaining recess (12),
- and at least one retaining fork (13) is mounted on the chassis (1),
-- which registers with the retaining recess (12)
-- and mechanically locks the piston rod (8) when the wheels (5) are lowered.

2. A road vehicle according to Claim 1, characterised by the feature that:
- the wheel links (3) are cranked.

3. A road vehicle according to Claim 1 or 2, characterised by the feature that:
- the stub axles (2) are mounted at each end on two portions extending parallel from the frame (1,1').

4. A road vehicle according to Claim 1, 2 or 3, characterised by the feature that:
- the stub axles (2) are mounted to rotate on the chassis (1,1') in bushes (24).

5. A road vehicle according to any of Claims 1 to 4, characterised by the feature that:
- the spring-damper assembly (10) is in the form of an annular spring (11).

6. A road vehicle according to any one of Claims 1 to 4, characterised by the feature that:
- the spring-damper assembly (10) is in the form of a rubber hollow spring.

7. A road vehicle according to any one of Claims 1 to 6, characterised by the feature that:
- the piston rod (8) is pivotably mounted on the piston (7),
- a sealing sleeve (9) between the cylinder (6) and the piston rod (8) prevents the ingress of dirt.

8. A road vehicle according to Claim 7, characterised by the feature that:
- the sealing sleeve (9) is accommodated with protection in the cylinder (6).

9. A road vehicle according to any one of Claims 1 to 8, characterised by the features that:
- a retaining fork (13) is associated with each cylinder (6),
- all the retaining forks (13) are intended to be actuated centrally via lever a linkage (14,15).

10. A road vehicle according to Claim 1, characterised by the feature that:
- fastening means for interchangeable superstructures are provided on the chassis frame (1,1')

## Revendications

1. Véhicule routier, en particulier remorque, comportant une plate-forme de chargement, dont le bord arrière peut être abaissé jusque sur la piste de roulage, et comprenant un cadre châssis (1, 1'), au moins deux essieux (2) montés contre le châssis (1, 1'), un bras oscillant pour roue (3) et un levier d'essieu (4) sur chaque essieu (2), une roue (5) à l'extrémité de chaque bras oscillant (3), un vérin hydraulique (6) avec un piston (7) et une tige de piston (8), monté entre le châssis (1, 1') et chaque levier d'essieu (4), et au moins un amortisseur, les roues (5) étant suspendues séparément, et les essieux (2) étant réalisés sous la forme de fusées d'essieu, caractérisé en ce qu'une structure ressort amortisseur (10) est montée entre le vérin (6) et le levier d'essieu (4), en ce que la tige de piston (8) est munie d'une rainure de retenue (12), et en ce qu'au moins une fourche de retenue (13) est montée sur le châssis (1), ladite fourche correspondant avec la rainure de retenue (12) et bloquant mécaniquement la tige de piston (8) lorsque les roues (5) sont descendues.

2. Véhicule routier selon la revendication 1, caractérisé en ce que les bras oscillants pour roue (3) sont coudés.

3. Véhicule routier selon la revendication 1 ou 2, caractérisé en ce que les fusées d'essieu (2) sont montés sur les deux côtés contre deux parties parallèles du cadre (1,1').

4. Véhicule routier selon l'une des revendications 1, 2 ou 3, caractérisé en ce que les fusées d'essieu (2) sont fixées dans des boîtiers (24) contre le châssis (1, 1') de manière à pouvoir pivoter.

5. Véhicule routier selon l'une quelconque des revendications 1 à 4, caractérisé en ce que la structure ressort amortisseur (10) est réalisée sous la forme d'un anneau-ressort (11).

6. Véhicule routier selon l'une quelconque des revendications 1 à 4, caractérisé en ce que la structure ressort amortisseur (10) est réalisée sous la forme d'un ressort évidé en caoutchouc.

7. Véhicule routier selon l'une quelconque des revendications 1 à 6, caractérisé en ce que la tige de piston (8) est montée sur le piston (7) de manière à pouvoir pivoter, et en ce qu'une manchette d'étanchéité (9), posée entre le vérin (6) et la tige de piston (8), empêche la pénétration de salissures.

8. Véhicule routier selon la revendication 7, caractérisé en ce que la manchette d'étanchéité (9) est montée dans le vérin (6) de manière à être protégée.

9. Véhicule routier selon l'une quelconque des revendications 1 à 8, caractérisé en ce que'une fovrche de retenue (13) est associé à chaque vérin (6) et en ce que toutes les fourches de retenue (13) sont actionnées par l'intermédiaire d'un système de tiges à levier (14, 15) à commande centralisée.

10. Véhicule routier selon la revendication 1, caractérisé en ce que des moyens de fixation sont prévus sur le cadre-châssis (1, 1') pour le montage d'une carrosserie interchangeable.
